# EUROPÄISCHE PATENTSCHRIFT

(11) **EP 2 191 187 B1**
(45) Veröffentlichungstag und Bekanntmachung des Hinweises auf die Patenterteilung: **18.04.2012**
(21) Anmeldenummer: 08785286.9
(22) Anmeldetag: 01.08.2008
(51) Int. Cl.: F16L 55/165, F21K 99/00, B29C 35/08

(54) **VERFAHREN UND VORRICHTUNG ZUM SANIEREN VON ROHRLEITUNGEN**
METHOD AND DEVICE FOR RENEWING PIPELINES
PROCEDE ET DISPOSITIF DE RENOVATION DE CANALISATIONS

(30) Priorität: 14.08.2007 DE 102007038197
(43) Veröffentlichungstag der Anmeldung: 02.06.2010
(73) Patentinhaber: Brandenburger Patentverwertung GBR, 76829 Landau (DE)
(72) Erfinder: NOLL, Christian, 67117 Limburgerhof (DE); WIND, Herbert, 76857 Albersweiler (DE)
(74) Vertreter: Kesselhut, Wolf
(86) Internationale Anmeldenummer: PCT/EP2008/006345
(87) Internationale Veröffentlichungsnummer: WO 2009/021644

(56) Entgegenhaltungen:
- EP-A1- 1 591 470
- EP-A1- 1 959 183
- WO-A2-2007/035203
- JP-A- 2004 092 818
- JP-A- 2007 030 237
- JP-A- 2008 265 245
- TW-U- M 315 805
- US-B1- 6 580 228
- "Mit LEDs in den Liner" BI UMWELTBAU, Bd. 2007, Nr. 3, Juni 2007 (2007-06), Seite 69, XP002517322 in der Anmeldung erwähnt

## Beschreibung

Die Erfindung betrifft ein Verfahren und eine Vorrichtung zum Sanieren von Rohrleitungen durch Einführen eines Faserschlauches, der mit einem lichthärtbaren Reaktionsharz getränkt ist, in die Rohrleitung und Härten des Harzes durch energiereiche Strahlung von Licht emittierenden Dioden gemäß dem Oberbegriff von Anspruch 1 und 6.

Ein besonders elegantes Verfahren zur Sanierung von erdverlegten Rohrleitungen besteht darin, einen flexiblen, mit lichthärtbarem Harz getränkten Faserschlauch in das Rohr einzuführen, diesen dort zu expandieren und danach das Harz durch Bestrahlen mit UV-Licht auszuhärten. Ein derartiges Verfahren ist z.B. in JP 2007 030237 A, EP-A122 246 und EP-A 1 262 708 beschrieben.

Ein Problem bei der Härtung mit UV- Lampen ist es, dass diese eine verhältnismäßig große Wärmemenge entwickeln, so dass durch die dadurch entstehende hohe Temperatur insbesondere bei kleinen Rohrdurchmessern die an der Innenseite des Faserschlauches angebrachte Schutzfolie aus Kunststoff geschädigt werden kann. Bei sehr großen Rohrdurchmessern müssen verhältnismäßig dicke Faserschläuche eingeführt werden, wobei dann zusätzlich zu der Härtung durch UV- Bestrahlung noch eine Peroxidhärtung notwendig wird, um eine vollständige Durchhärtung zu erreichen.

In der EP-A 1 591 470 wird daher vorgeschlagen, bei der Sanierung von Rohrleitungen den lichthärtbaren Folienschlauch durch energiereiche Strahlung von Licht emittierenden Dioden (LEDs) zu härten. Diese LEDs erzeugen ein kaltes Licht, so dass bei der Bestrahlung nur geringe Wärmemengen abgegeben werden. Ein weiterer Vorteil von LEDs besteht darin, dass sich die Wellenlänge des von den LED- Lichtquellen erzeugten Lichts im Gegensatz zu UV- Gasentladungslampen exakt auf die für die Zersetzung der im lichthärtbaren Harz enthaltenen Photoinitiatoren benötigten Wellenlängen einstellen lässt. Außerdem ist die Strahlungseffzienz wesentlich höher als bei UV- Lichtquellen.

Das Verfahren zum Sanieren von Rohrleitungen, z.B. von erdverlegten Abwasserkanälen und von Druckrohren für Wasser, Öl und Gas, unter Einsatz der Lichthärtung ist als solches somit an sich bekannt und z.B. in den genannten Druckschriften beschrieben.

In einer Veröffentlichung in "bi UmweltBau 3/07" ist eine technische Ausführung der LED- Härtung von mit lichthärtbarem Harz getränkten Faserschläuchen beschrieben. Danach sind auf einen Träger mit achteckigem Querschnitt acht ringförmig nebeneinander angeordnete Dioden montiert. Diese Anordnung weist das Problem auf, dass durch die acht Dioden nicht alle Bereiche des Faserschlauches gleichmäßig gehärtet werden, da die LEDs nur einen geringen Streuwinkel besitzen, und zudem beim Ausfall einer einzigen Diode der Stromfluss und damit die gesamte Härtung unterbrochen wird, da die einzelnen Dioden offenbar elektrisch hintereinander geschaltet sind.

Licht emittierende Dioden (LEDs) sind somit ebenfalls bekannt und z.B. in der EP-A 1591 470 und in den dort zitierten Veröffentlichungen beschrieben. Geeignet sind auch organische Licht emittierende Dioden OLED auf Basis von organischen, halbleitenden Polymeren.

Der Erfindung liegt demgemäß die Aufgabe zugrunde, ein technisch brauchbares Verfahren und eine zugehörige Vorrichtung zur Härtung von mit lichthärtbarem Harz getränkten Faserschläuchen bei der Sanierung von Rohrleitungen bereitzustellen, welche die zuvor beschriebenen Unzulänglichkeiten des Standes der Technik vermeiden.

Diese Aufgabe wird erfindungsgemäß durch ein Verfahren sowie eine Vorrichtung mit den Merkmalen der Ansprüche 1 und 6 gelöst.

Weitere Merkmale der Erfindung sind in den Unteransprüchen beschrieben.

Gemäß dem erfindungsgemäßen Verfahren werden hierzu auf einem spiralförmigem Träger Dioden in mehreren parallelen Bereichen angeordnet. Dabei sind die Dioden in den jeweiligen benachbarten Bereichen horizontal gegeneinander versetzt. Durch diese Maßnahme wird erreicht, dass sich die Streuwinkel der einzelnen, in den ringförmigen bzw. spiralförmigen Bereichen angebrachten Dioden überlappen, wodurch eine gleichmäßige Aushärtung des Faserschlauches gewährleistet wird.

In entsprechender Weise umfasst eine erfindungsgemäße Vorrichtung zur Durchführung des Verfahrens einen spiralförmigen Träger mit einer Vielzahl von darauf angeordneten Licht emittierenden Dioden, welcher z.B. mit Hilfe von Rädern durch eine zu bestrahlende Rohrleitung hindurch geführt werden kann. Die Dioden sind hierbei auf dem Träger erfindungsgemäß in mehreren parallelen wendelartigen umfänglichen Bereichen in der Weise angeordnet, dass die benachbarten Dioden zweier aneinander angrenzender Bereiche in Längsrichtung des Trägers betrachtet wechselweise umfänglich zueinander versetzt sind. Der Versatz zwischen zwei benachbarten ringförmigen oder wendelartigen Bereichen beträgt hierbei bevorzugt die Hälfte des Diodendurchmessers.

Der Durchmesser der spiralförmigen Träger richtet sich nach dem Durchmesser der zu sanierenden Rohrleitungen. Er kann bei der bevorzugten Ausführungsform der Erfindung zwischen 1 und 200 cm, vorzugsweise zwischen 5 und 150 cm liegen.

Die Zahl der Dioden auf einem Bereich richtet sich nach dem Durchmesser der Rohrleitungen. Sie ist bevorzugter Weise wenigstens so groß, dass eine ausreichende Überlappung der Streuwinkel der Dioden gewährleistet ist. Auch die Anzahl der mit den Dioden besetzten Bereiche richtet sich bevorzugt nach dem Durchmesser der zu sanierenden Rohrleitungen, sowie nach der Wanddicke des mit dem lichthärtbaren Harz getränkten Faserschlauches. Sie kann z.B. zwischen 2 und 50, vorzugsweise zwischen 4 und 30 Dioden pro Bereich liegen. Insgesamt können somit z.B. mehrere tausend Dioden auf einem Träger sitzen. Der Abstand zwischen den Dioden und dem zu härtenden Faserschlauch kann je nach Intensität der von den Dioden ausgehenden Lichtstrahlung zwischen 1 und 50 cm, vorzugsweise 2 und 20 cm betragen, und ist in vorteilhafter Weise auch veränderbar.

Die Erfindung wird nachfolgend mit Bezug auf die Zeichnungen anhand bevorzugter Ausführungsformen beschrieben.

In den Zeichnungen zeigen:
- Fig. 1: eine nicht zur Erfindung gehörende Ausführungsform einer Vorrichtung mit ringförmigen Bereichen angeordneten Dioden,
- Fig. 2: eine Ausführungsform der erfindungsgemäßen Vorrichtung, bei der der Träger spiralförmig ausgestaltet ist,
- Fig. 3: eine Querschnittansicht durch einen Träger nach Fig. 1 und Fig. 2, und
- Fig. 4: eine schematische Darstellung einer elektrischen Schaltung für die auf einem erfindungsgemäßen Träger angeordneten Dioden.

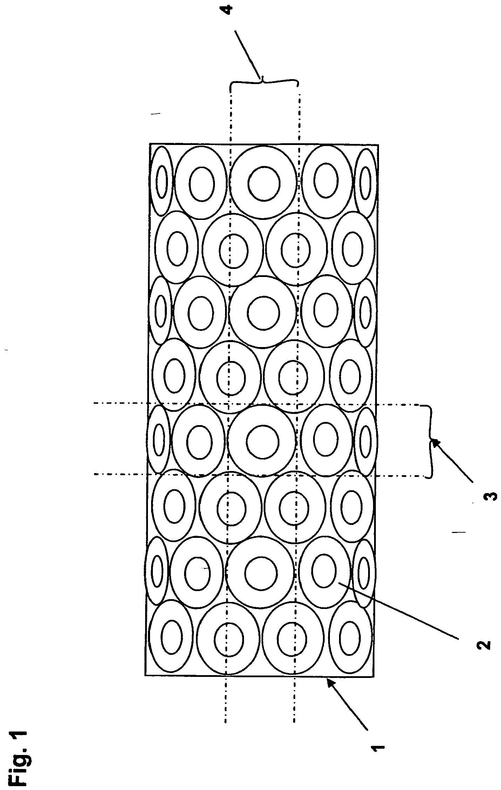

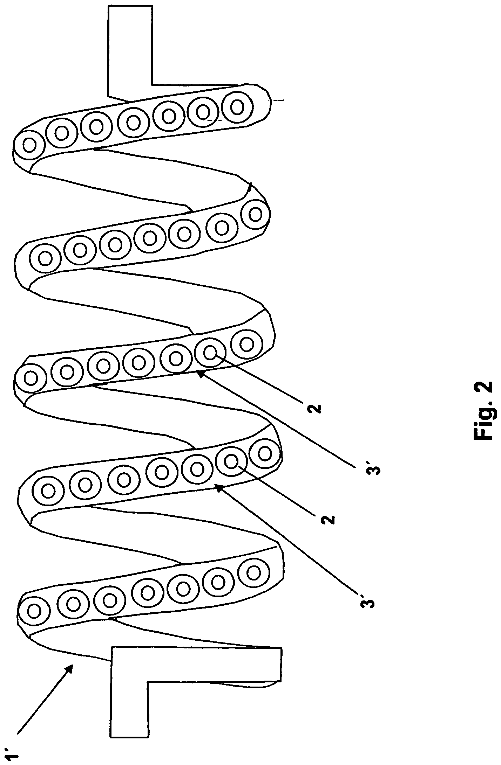

Wie in Fig. 1. und 2 gezeigt ist, umfasst eine Vorrichtung zur Durchführung des erfindungsgemäßen Verfahrens einen Träger, der gemäß der nicht zur Erfindung gehörenden Ausführungsform von Fig. 1 als ein zylindrischer oder rohrförmiger Träger 1, und gemäß der erfindungsgemäβen Ausführungsform von Fig. 2 als ein spiralförmiger Träger l'ausgestaltet ist.

Auf dem Träger 1 bzw.1' sind eine Vielzahl von Leuchtdioden 2 - nachfolgend auch als Dioden bezeichnet - in Bereichen angeordnet, die bei der Ausführungsform von Fig. 1 als nebeneinander liegende ringförmige Bereiche 3, und bei der Ausführungsform von Fig.2 als wendelartige Bereiche 3'ausgeschaltet sind.

Bei der in Fig. 1 gezeigten Ausführungsformen sind die Dioden in den ringförmigen Bereichen entlang von in Längsrichtung zur Mittelachse des Trägers 1 ausgerichteten Reihen 4 angeordnet. Der rohrförmige oder zylinderförmige Träger 1 ist vorzugsweise ein starres Rohr, z.B. aus Kunststoff oder Metall, wie Aluminium oder Kupfer. Rohre aus derartigen, gut Wärme leitenden Metallen haben den Vorteil, dass die von den Dioden abgestrahlte Wärme aufgenommen und abgeleitet wird. Hierdurch ergibt sich der Vorteil, dass die Leistung und die Lebensdauer der LEDs im Laufe der Zeit nicht abnehmen. Eine noch bessere Wärmeableitung kann dadurch erzielt werden, dass man um die Diode herum Kühlkörper mit verschiedener, z.B. ringfächerförmiger Geometrie anbringt.

Der Träger kann aber auch aus einem flexiblen Material bestehen, z.B. aus Gummi oder einem gut biegsamen Kunststoff, wie z.B. Polypropylen oder Polyamid. Dies ist insbesondere dann wichtig, wenn in der zu sanierenden Rohrleitung Krümmungen vorliegen. Gemäß einer weiteren Ausgestaltung kann der Träger auch aus runden oder vieleckigen Teilen zusammengesetzt sein, die gelenkig und gegebenenfalls voneinander lösbar miteinander verbunden sind. Träger aus solchen, gelenkig miteinander verbundenen Rohrsegmenten sind sehr flexibel und können "wurmartig" auch in kompliziert geformte Rohrleitungen eingeführt werden. Vorzugsweise bestehen auch hier die Rohrsegmente wieder aus Aluminium.

Bei einer in Fig. 2 gezeigten Ausführungsform der Erfindung sind die Dioden 2 auf einem spiralförmigen Träger 1 'angeordnet, wobei die Dioden 2 in den einzelnen benachbarten Windungen der wendelartigen Bereiche 3'des spiralförmigen Trägers 1' horizontal, d.h. in Längsrichtung des Trägers betrachtet wechselweise in Umfangsrichtung, gegeneinander versetzt sind. Auch hier kann die Spirale, bzw. der spiralförmige Träger oder Grundkörper 1 'starr oder flexibel sein.

Spiralförmige Träger haben den Vorteil, dass der Durchmesser des Trägers durch Aufweiten der Spiralwindungen in Abhängigkeit vom Durchmesser der Rohrleitung veränderbar ist, wozu beispielsweise eine in den Figuren nicht näher gezeigte Verstelleinrichtung vorgesehen sein kann, die z.B. über in radialer Richtung pneumatisch oder mechanisch auseinanderfahrbare Arme auf die Innenseite des spiralförmigen Trägers oder Grundkörpers 1' wirkt, um diesen zu expandieren oder zusammen zu fahren.

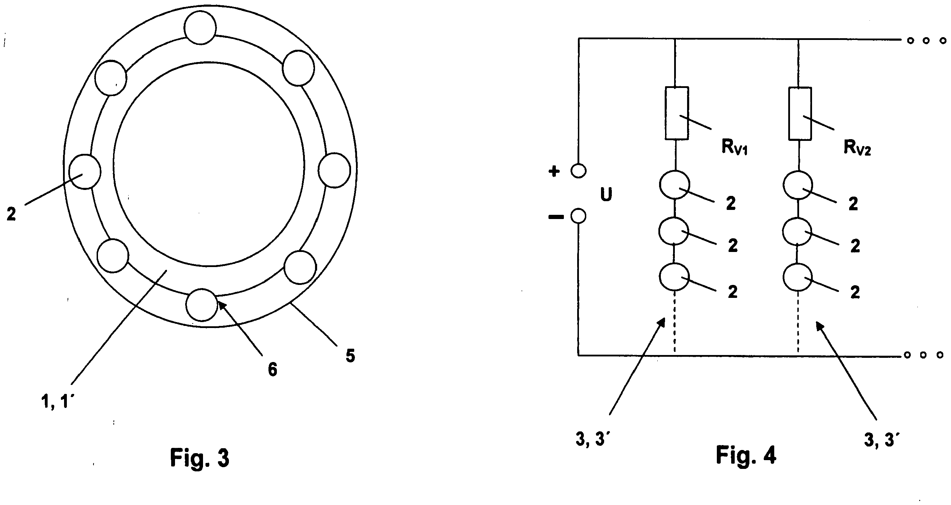

Bei allen Ausführungsformen ist es bevorzugt so, dass die einzelnen Dioden 2 - wie in Fig.4 gezeigt - in jedem ringförmigen bzw. spiralförmigen Bereich 3, 3'elektrisch hintereinander (in Reihe), die einzelnen Bereiche hingegen jedoch elektrisch parallel zueinander geschaltet sind. Dadurch wird in vorteilhafter Weise erreicht, dass bei Ausfall einer Diode 2 zwar der Bereich 3, 3', in welchem diese angeordnet ist, ausfällt, der Stromfluss in den restlichen Bereichen aber nicht unterbrochen wird. Im einzelnen kann die elektrische Schaltung dabei beispielhaft wie nachfolgend beschriebenen und in Fig. 4 gezeigt ausgestaltet sein.

Als Dioden, mit welchen die energiereiche, für die Härtung von lichthärtbaren Harzen notwendige Lichtemission im UV- nahen Wellenlängenbereich von z.B. 450 bis 300 nm, vorzugsweise 395 bis 360 nm erzeugt werden kann, können beispielsweise in diesem Wellenlängenbereich emittierende Leuchtdioden (LEDs) zum Einsatz gelangen, die z.B. 20 mA Durchlassstrom benötigen. Dieser Strom bedingt eine Spannung U an der jeweiligen Diode 2 in Durchlassrichtung von etwa 2 bis 4 V. Schaltet man z.B. acht Dioden 2 für einen Bereich 3, 3'in Reihe, so beträgt die Summenspannung an den acht Dioden z.B. 16 bis 32 V. Zur Einstellung des Stroms auf 20 mA ist demgemäß bevorzugt ein Vorschaltwiderstand oder Vorwiderstand Rv von z.B. 100 Ohm sinnvoll. An ihm fällt bei dem gewählten Strom eine Spannung von 2 V ab. Somit muss in diesem Falle eine Speisespannung in Höhe von 18 bis 34 V angelegt werden.

Die Wirkung des Vorschaltwiderstands Rv wird sinnvoller Weise durch den Einsatz bekannter, zur Strombegrenzung üblicher Vorschaltgeräte realisiert.

Nach einem weiteren der Erfindung zu Grunde liegenden Gedanken werden die Diodenserien mehrerer Bereiche 3, 3' - wie im Schaltbild von Fig. 4 prinzipiell dargestellt - parallel geschaltet. Dabei sind mit 2 wieder die einzelnen Dioden und mit 3, 3' die parallel geschalteten Bereiche bezeichnet. Hierbei ist bevorzugt jedem Bereich ein eigener Vorschaltwiderstand Rv zugeordnet, wobei in Fig. 4 lediglich zwei Vorschaltwiderstände Rv1 und Rv2 beispielhaft gezeigt sind.

Weiterhin kann es vorgesehen sein, bei den beiden Ausführungsformen von Fig. 1 und 2 den rohrförmigen bzw. spiralförmigen Träger 1,1' von einer bevorzugt umfänglich geschlossenen rohrförmigen, gegebenenfalls flexiblen Abdeckhülle 5 aus transparentem, vorzugsweise temperaturbeständigem Material, z.B. aus Glas oder aus bei vorzugsweise mindestens 200°C beständigem, transparentem Kunststoff, zu umgeben.

Dadurch kann in vorteilhafter Weise verhindert werden, dass die Dioden 2, z.B. durch Staub oder Feuchtigkeit verschmutzt werden, was andernfalls zu einem Kurzschluss, bzw. zu einem Leistungsabfall führen kann. Der Abstand zwischen der Innenseite der Abdeckhülle 5 und der Oberfläche der Dioden 2 ist bevorzugter Weise möglichst gering und kann z.B. 0,5 bis 2 mm betragen.

Zweckmäßigerweise sind die Dioden 2 im Material des Trägers 1, 1'etwas versenkt, wozu diese z.B. in entsprechenden Ausnehmungen 6 aufgenommen sein können, wie dies in Fig. 3 angedeutet ist. Darin sind wiederum mit 1, 1' der Träger, mit 2 die versenkten Dioden 2 und mit 5 die Abdeckhülle bezeichnet.

## Patentansprüche

1. Verfahren zum Sanieren von Rohrleitungen durch Einführen eines Faserschlauches, der mit einem lichthärtbaren Reaktionsharz getränkt ist, in die Rohrleitung und Härten des Harzes, indem Licht emittierende Dioden (2) durch die Rohrleitung gezogen werden, die an der Umfangsoberfläche eines spiralförmigen Trägers (1') angeordnet ist,
**dadurch gekennzeichnet, dass**
die Dioden (2) auf dem spiralförmigen Träger (1') in mehreren parallelen wendelartigen Bereichen (3') angeordnet sind, wobei die Dioden (2) auf den jeweils benachbarten Bereichen (3') in Längsrichtung des Trägers betrachtet wechselweise umfänglich gegeneinander versetzt sind, und dass eine Verstelleinrichtung vorgesehen ist, mit welcher der spiralförmige Träger (1') in radialer Richtung auseinander- oder zusammenfahrbar ist.

2. Verfahren nach Anspruch 1,
**dadurch gekennzeichnet, dass**
in jedem spiralförmigen Bereich (3') die einzelnen Dioden (2) elektrisch hintereinander geschaltet und die einzelnen Bereiche (3') elektrisch parallel geschaltet sind.

3. Verfahren nach einem der vorhergehenden Ansprüche,
**dadurch gekennzeichnet, dass**
der Träger (1') von einer Abdeckhülle (5) aus transparentem, vorzugsweise temperaturbeständigem Material umgeben ist.

4. Verfahren nach einem der vorhergehenden Ansprüche,
**dadurch gekennzeichnet, dass**
der Träger aus einem gut Wärme leitenden Metall, vorzugsweise aus Aluminium besteht.

5. Verfahren nach einem der vorhergehenden Ansprüche,
**dadurch gekennzeichnet, dass**
die Dioden (2) von Kühlkörpern umgeben sind.

6. Vorrichtung zur Durchführung des Verfahrens nach einem der vorhergehenden Ansprüche, umfassend einen spiralförmigen Träger (1') mit einer Vielzahl von darauf angeordneten Licht emittierenden Dioden (2), welcher durch eine zu bestrahlende Rohrleitung hindurchführbar ist,
**dadurch gekennzeichnet, dass**
die Dioden (2) auf dem Träger (1') in mehreren parallelen wendelartigen umfänglichen Bereichen (3') angeordnet sind, wobei die benachbarten Dioden (2) zweier aneinander angrenzender Bereiche (3') in Längsrichtung des Trägers (1') betrachtet wechselweise umfänglich zueinander versetzt sind, und dass eine Verstelleinrichtung vorgesehen ist, mit welcher der spiralförmige Träger (1') in radialer Richtung auseinander- oder zusammenfahrbar ist.

7. Vorrichtung nach Anspruch 7,
**dadurch gekennzeichnet, dass**
der umfängliche Versatz zwischen zwei benachbarten Bereichen (3') im Wesentlichen dem halben Durchmesser einer Diode (2) entspricht.

## Claims

1. Method of renovating pipelines by inserting a fibre sleeve, which is soaked with a light-curing reaction resin, into the pipeline and curing of the resin, wherein light-emitting diodes (2) are pulled through the pipeline which is arranged on the peripheral surface of a spiral carrier (1'),
**characterised in that**
the diodes (2) are arranged on the spiral carrier (1') in several parallel spirally-disposed regions (3'), whereby the diodes (2) are staggered on each of the neighbouring regions (3') alternately opposite each other at the perimeter viewed in the longitudinal direction of the carrier, and that an adjusting device is provided by means of which the spiral carrier (1') can be moved outwardly or inwardly in the radial direction.

2. Method in accordance with claim 1,
**characterised in that**
the individual diodes (2) in each spiral region (3') are connected in series electrically and the individual regions (3') are connected in parallel electrically.

3. Method in accordance with one of the previous claims,
**characterised in that**
the carrier (1') is surrounded by a covering envelope (5) of a transparent, preferably temperature-resistant material.

4. Method in accordance with one of the previous claims,
**characterised in that**
the carrier (1') consists of a good thermally conducting metal, preferably aluminium.

5. Method in accordance with one of the previous claims,
**characterised in that**
the diodes (2) are surrounded by heat sinks.

6. Device to carry out the method in accordance with one of the previous claims, comprising a spiral carrier (1') with a multiplicity of light-emitting diodes (2) arranged on it, which can be guided through a pipeline to be irradiated,
**characterised in that**
the diodes (2) are arranged on the spiral carrier (1') in several parallel spirally-disposed, peripheral regions (3'), whereby the neighbouring diodes (2) of two neighbouring regions (3') are staggered alternately in relation to each other at the perimeter viewed in the longitudinal direction of the carrier (1'), and that an adjusting device is provided by means of which the spiral carrier (1') can be moved outwardly or inwardly in the radial direction.

7. Device in accordance with claim 6,
**characterised in that**
the peripheral offset between the two neighbouring regions (3') corresponds essentially to a half of the diameter of a diode (2).

## Revendications

1. Procédé de rénovation de conduites par introduction d'un tuyau flexible en fibres imprégné d'une résine de réaction photodurcissable dans la conduite et durcissement de la résine, en tractant à travers la conduite des diodes émettrices de lumière (2), qui sont disposées sur la surface circonférentielle d'un support en spirale (1'),
**caractérisé en ce que**
les diodes (2) sont disposées sur le support en spirale (1') dans plusieurs zones hélicoïdales parallèles (3'), les diodes (2) disposées dans des zones voisines (3'), vu dans le sens longitudinal du support, étant tour à tour circonférentiellement décalées les unes par rapport aux autres, et **en ce qu'**un dispositif de réglage est prévu, au moyen duquel le support en spirale (1') peut être déployé ou replié dans le sens radial.

2. Procédé selon la revendication 1,
**caractérisé en ce que**
dans chaque zone hélicoïdale (3') les différentes diodes (2) sont montées électriquement en série et les différentes zones (3') sont montées électriquement en parallèle.

3. Procédé selon l'une des revendications précédentes,
**caractérisé en ce que**
le support (1') est entouré d'une gaine de recouvrement (5) en matériau transparent, de préférence thermostable.

4. Procédé selon l'une des revendications précédentes,
**caractérisé en ce que**
le support est réalisé en un métal présentant une bonne conductivité thermique, de préférence en aluminium.

5. Procédé selon l'une des revendications précédentes,
**caractérisé en ce que**
les diodes (2) sont entourées de radiateurs.

6. Dispositif pour la mise en oeuvre du procédé selon l'une des revendications précédentes, comprenant un support en spirale (1') avec une pluralité de diodes émettrices de lumière (2) disposées dessus, lequel peut passer à travers une conduite à irradier,
**caractérisé en ce que**
les diodes (2) sont disposées sur le support (1') dans plusieurs zones circonférentielles hélicoïdales parallèles (3'), les diodes voisines (2) de deux zones contiguës (3'), vu dans le sens longitudinal du support (1'), étant tour à tour circonférentiellement décalées les unes par rapport aux autres, et **en ce qu'**un dispositif de réglage est prévu, au moyen duquel le support en spirale (1') peut être déployé ou replié dans le sens radial.

7. Dispositif selon la revendication 7,
**caractérisé en ce que**
le décalage circonférentiel entre deux zones contiguës (3') correspond substantiellement à la moitié du diamètre d'une diode (2).
